# EUROPEAN PATENT SPECIFICATION

(11) **EP 0 815 626 B1**
(45) Date of publication and mention of the grant of the patent: **14.08.2002**
(21) Application number: 96906852.7
(22) Date of filing: 15.03.1996
(51) Int. Cl.: H02G 5/06

(54) **BUSBAR JOINT**
STROMSCHIENEVERBINDUNG
JONCTION POUR BARRES OMNIBUS

(30) Priority: 17.03.1995 GB 9505409
(43) Date of publication of application: 07.01.1998
(73) Proprietor: Moeller GmbH, 53115 Bonn (DE)
(72) Inventor: BROOKS, Kevin, Alton, Hampshire GU34 2EG (GB); BUTCHER, Robert, Overton, Hampshire RG25 3JG (GB); REYNOLDS, Andrew, Swindon, Wiltshire SN2 3LN (GB)
(74) Representative: Parker, Nigel Edward
(86) International application number: GB9600601
(87) International publication number: WO9629769

(56) References cited:
- US-A- 4 029 379
- US-A- 4 842 533

## Description

This invention relates to improvements in or relating to busbars and is more particularly concerned with the manner in which lengths of busbar conductors are connected together in end-to-end relationship.

Various designs of busbar are in operation and these may consist of trunking having an extruded aluminium alloy channel shaped housing defining a base and sidewalls and an interlocking top cover strip made of Noryl (insulating material). One such form of busbar is in use by the Applicant Company, and four elongate conductors, for example of aluminium or copper extend side by side within the housing. In order to join the elongate conductors together joints known as "joint packs" are utilised consisting of a number of flat metal conductor plates mounted on a central bolt with spring means extending in between the plates around the bolt. The metal plates are divided into pairs with plates of insulation material being provided in between each pair of metal plates. Adjacent ends of each pair of metal plates form a slot for reception of an associated one of the elongate conductors on one busbar length. The opposing ends of each said pair of metal plates form an opposing slot for receiving an associated elongate conductor of a second length of busbar having elongate conductors to be joined in end-to-end relationship with the conductors of the first busbar length. Thus, each conductor of the first length can be joined in end-to-end relationship with an associated conductor of the second length. Once the conductors of one length of busbar have been aligned in end-to-end relationship with associated conductors of a second length of busbar within the slots formed by the metal plates and pushed firmly into the slots, the central bolt can be tightened pulling all the metal plates together closing the slots firmly on their respective conductors. The ends of the conductors themselves may need to be splayed apart from one another in order to be received in the slots of the joint pack.

There tend to be disadvantages involved in the manner of use and construction of such joint packs. Firstly, usually, the design of a joint pack will suit only one type of busbar or narrow rating range of busbars, other busbars or ranges requiring different sizes or types of joint pack. Secondly, the metal plates themselves may be prone to some deformation particularly at the ends which define the receiving slots for the conductors so that the slots may not always be of constant width (more particularly at the opening of the slot which may be narrowed) when the joint pack is ready for assembling to lengths of busbar. This may possibly lead to fouling of the plates or difficulty in introducing the elongate conductor into the slots. Also, it is possible that the conductors may be pushed too far in the slots engaging the bolt or spring means perhaps causing fouling of the conductors or other disadvantageous effects. Additionally, in known designs, there is no indication given by the joint pack as to when the correct torque has been reached for tightening the bolt on the joint pack.

US-A-4842533 discloses a joint for electrical power distribution for electrically connecting between adjacent busway sections. The busway joint includes a modular assembly containing spaced metallic splice plates separated by corresponding insulating plates. The module is sandwiched between a pair of joint covers by means of an insulated thru-bolt. The spacing between a pair of joint covers by means of an insulated thru-bolt. The spacing between the splice joint for receiving corresponding busways stabs is said to be accurately set by an apertured depression stamped within each of the splice plates.

US-A-4029379 discloses a torque indicating nut for use with a complimentary bolt. The bolt and nut assembly is said to be useful to join sections of electrical bus duct and the electrical conductors contained therein.

It is an object of the present invention to at least alleviate one or more of the aforementioned, or other, problems associated with "joint packs" or in joining elongate conductors together in end-to-end relationship.

According to the present invention there is provided a joint for joining together elongate conductors of a first length of busbar and elongate conductors of a second length of busbar, said elongate conductors being joined together in end-to-end relationship, said joint having pairs of conductor plates defining slots for receiving the elongate conductors, and insulation plates between said pairs, wherein the central region of each conductor plate has a channel or recess, and the conductor plates of each pair overlie one another such that the channels or recesses of said conductor plates extend in opposed directions with the bottoms of the channels or recesses being adjacent one another in order to define central gaps in between the conductor plates and the insulation plates the gaps accomodating bushes characterised in that said bushes compress the central recessed or channelled regions of the conductor plates of each pair together to spring-load or urge the ends of the conductor plates of each pair apart from one another to provide a set slot opening width (w) defined by the depths of the recesses or channels.

Said bushes may each be comprised of two interfitting bush components. Each bush component may have an external flange and a tubular portion which in use surrounds a central bolt of the joint (or insulation sleeve surrounding the bolt) and the tubular portion of one of the components may fit inside a tubular portion of the other bush component engaging an internal flange thereof to set a gap between the flanges of the bush, which gap may be slightly less than the combined thickness of the conductor plates of one pair in order to compress the plates together in central regions thereof.

The joint may be provided with a double-headed torque bolt.

One embodiment of the present invention comprises a joint having at least four pairs of generally rectangular conductor plates, mounted on a central bolt preferably surrounded by an insulation sleeve, said pairs of plates being separated from one another by insulation plates, and each plate of each pair of conductor plates being provided with a (central) channel or recess for reception of an associated flange of a double flanged spool-form bush, the bush having a tubular portion passing through aligned holes of the plates of the pair and the gap between the flanges receiving bottom portions of the channels or recesses, the flanges acting to compress the channelled or recessed portions of said plates of the pair together and to spring the ends of said plates thereapart, each flange being in contact with an associated one of the insulation plates.

The joint according to the inveniton preferably has one or more of the following features:
(a) metal conductor plates which are recessed or channelled receiving spring means preferably in the form of bushes preferably comprising two interfitting bush components defining a gap slightly less than the thickness of two adjoining plates in order to compress two adjoining plates together in central regions thereof and thereby spring apart flat portions of adjacent plates;
(b) a central bolt arranged to tighten the metal plates of the joint around elongate conductors with only one or two turns of the bolt;
(c) conductor plates sprung or urged into contact with associated insulation plates;
(d) conductor plates connected together in pairs by double-flanged or spool bushes compressing the conductor plates together.

Further according to the present invention there is provided a kit of parts comprising a plurality of busbar lengths and at least one busbar joint in accordance with the invention and still further according to the present invention there is provided a busbar assembly comprising at least two busbar conductor lengths assembled together in end-to-end relationship with a joint in accordance with any one of the invention joining together the conductors of each busbar conductor length in end-to-end relationship.

Further according to the present invention there is provided use of a joint in accordance with any of the preceding statements of invention to assemble together the conductors of two busbar lengths in end-to-end relationship.

Further advantageous apparatus and method features will be apparent from the following description and drawings.

Although, known "joint packs" may include a spring or spring means around the central bolt such spring or spring means only acts to hold the assembly together and does not act to bias or spring load the conductor plates (and in particular the ends of said plates) into contact with adjacent insulation plates. Rather the spring or spring means may have the converse effect of spacing the conductor plates slightly from the adjacent insulation plates.

An embodiment of a joint in the form of a joint pack for a busbar and method of joining busbar elongate conductors together will now be described by way of example only, with reference to the accompanying simplified drawings in which:
FIGURE 1 shows a front view of a joint pack in accordance with the present invention;
FIGURE 2 shows a view of the joint pack looking in direction of arrow A of FIGURE 1;
FIGURE 3 shows a view similar to FIGURE 1, being a central sectional view taken on the line III-III of FIGURE 2;
FIGURE 4 shows a front view with hidden detail of a length of busbar cut-away to show four conductor lengths engaging the joint pack;
FIGURE 5 shows a sectional view of the busbar itself taken on line V-V of FIGURE 4;
FIGURE 6 shows orthographic and isometric views of a bush component of the joint pack, and
FIGURE 7 shows orthographic views and isometric views of a bush component which mates with the bush component shown in FIGURE 6.

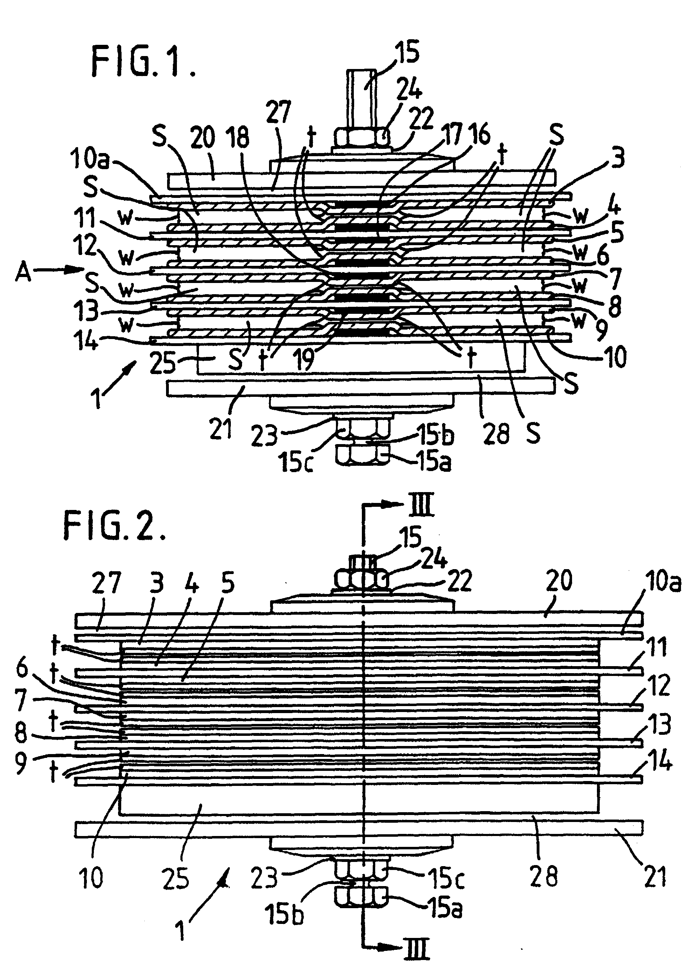

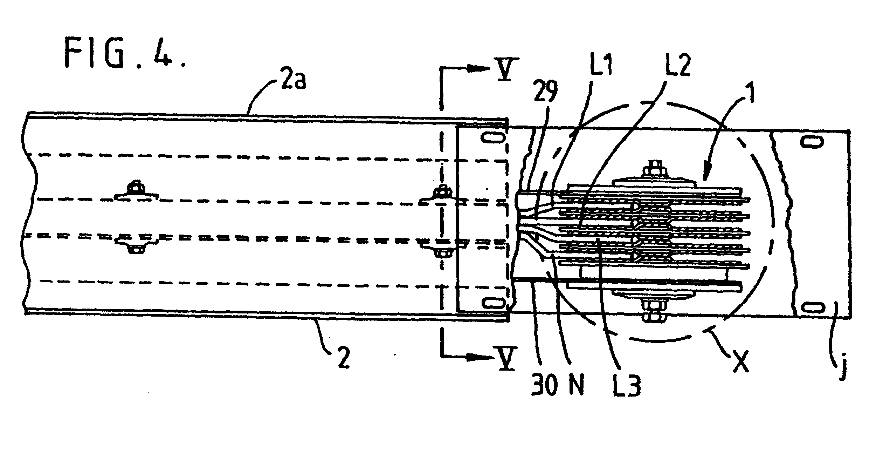

FIGURES 1 and 2 of the drawings show front and side elevational views of a joint pack 1 which is used for joining elongate conductors L1,L2,L3,N of a busbar conductor length 2 (see FIGURE 4) in end-to-end relationship with associated elongate conductors (not shown) of an aligned busbar length (not shown).

The general form of the joint pack 1, having a series of phase fishplates or metal conductor plates 3,4,5,6,7,8,9,10, pairs of which are spaced apart by phase insulator sheets or plates 10a,11,12,13,14, is already known and so this description will be concerned mainly with the differences in the joint pack over known arrangements.

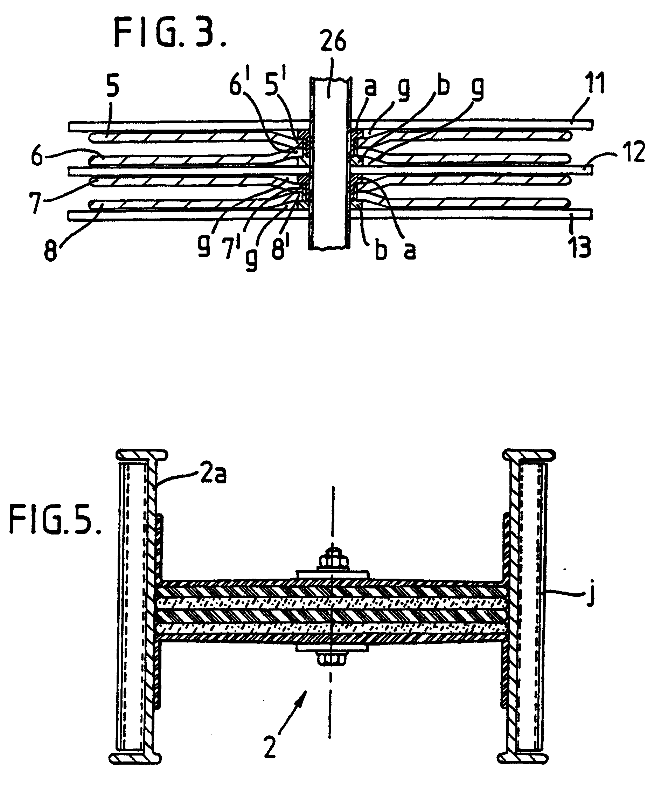

The general assembly of metal conductor plates 3 to 10 with insulation plates 10a to 14 mounted on a central bolt 15 is known *per se.* However, the known metal conductor plates are generally flat and similar to the insulation plates 10a to 14. Each pair of metal conductor plates 3,4; 5,6; 7,8; 9,10 is provided with a central collar or spool bush 16,17,18,19 made up from two interengaging or interlocking bush components a,b as shown more particularly in FIGURE 3 and FIGURES 6 and 7. The combination of the bushes 16 to 19 mounted on the central bolt 15 in association with the recessed or channelled configuration of the metal conductor plates 3 to 10 spring-load each pair of plates 3,4; 5,6; 7,8; 9,10 in such a manner that the ends of the plates firmly engage associated insulation plates 10a to 14 thereby advantageously maintaining the correct slot widths w for the slots S defined by respective pairs of conductor plates 3,4; 5,6; 7,8; 9,10. Indeed, the flat lengths of the plates 3,4; 5,6; 7,8; 9,10 are firmly urged into contact with adjacent insulation plates 10a to 14 rather than being held relatively loosely as in prior art arrangements.

A further difference in the joint pack 1 and prior art joint packs resides in the provision of the bolt 15 which is a double-headed torque bolt (unlike prior art arrangements) such that the outer head 15a can be tightened up to the particular required torque at which point the shaft 15b breaks; the head 15a breaks off leaving the inner end 15c securing the joint pack onto elongate conductors of two busbar lengths in end-to-end relationship under the correct levels of pressure and stress in a manner which should be self-evident. It is believed that this is an important improvement over the previous method of assembly of a joint pack using a single bolt head that could be tightened using a torque wrench. Utilising the double-headed torque bolt reduces installation time since the tightening required may only be one or two turns of the bolt 15 unlike in prior art arrangements where a considerable number of turns might be necessary.

The joint pack 1 comprises outer joint side packer plate 20 which is parallel to outer joint side packer plate 21, washers 22 and 23 are provided on either side of plates 20 and 21 adjacent nut 24 and the inner bolt head 15c respectively in a manner which should be evident from FIGURE 1. A thicker phase insulator plate 25 is provided in between insulation plate 14 and the joint side packer plate 21. An insulator sleeve or tube 26 (see FIGURE 3) is provided on the bolt 15.

FIGURE 4 shows a cut-away end of a busbar 2 which is a 2,500 amp busbar including an H-shaped section of aluminium trunking 2a carrying front and rear sets of busbar conductor lengths L1,L2,L3 and N in back-to-back relationship in a manner which should be generally self-explanatory. Reference is made to Patent Application No. 2189070B of the Applicant which shows a busbar having elongate conductors provided in back-to-back relationship. The ringed detail X in FIGURE 4 shows the joint pack 1 corresponding to the view shown in FIGURE 1. It is to be noted that the ends of the busbar conductor lengths L1,L2,L3 and N are splayed apart in order to be received in the respective slots S formed by the associated pairs of conductor plates 3,4; 5,6; 7,8; 9,10 in a manner as previously described.

As shown in FIGURE 4, part of a trunking connection cover j has been cut-away to reveal the joint pack 1. Slots 27,28 defined between packer plate 20 and plate 10a and between packer plate 21 and plate 25, respectively, receive side plates 29,30 of a trunking joint.

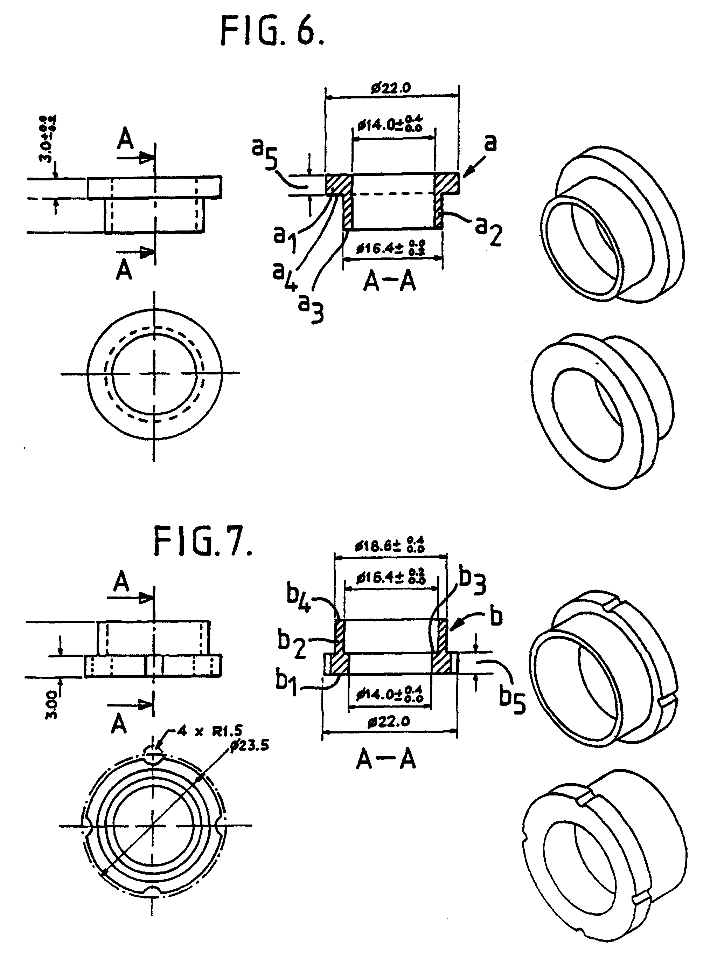

FIGURES 6 and 7 show the bush components a,b that cooperate with one another to form the bushes 16,17,18 and 19.

FIGURE 6 shows bush component a having an upper annular flange a₁ and a tubular portion a₂ which in use with bush component b (see FIGURES 3 and 7) slidably interfits into the tubular portion b₂ of bush component b (with bottom annular edge a₃ engaging inner annular rim b₃ and upper annular edge b₄ engaging outer annular rim a₄). The depths of the tubular portions a₂ and b₂ are similar so that they fit together to define an annular gap which receives annular portions for example 5',6';7',8' (see FIGURE 3) of associated pairs of conductor plates 3,4; 5,6; 7,8; 9,10 in a tight-fitting stressed relationship. Thus, the annular receiving gap defined in each collar 16,17,18,19 is slightly less than the combined thickness of an associated pair of conductor plates 3,4; 5,6; 7,8; 9,10 so that the central regions of said pairs of plates surrounding the bolt 15 will be under an axial compression force. Said axial compression force will act to spring each pair of plates 3,4; 5,6; 7,8; 9,10 apart from one another and (owing to the unique tapering or channelling of each pair of plates in their central regions towards one another creating central trapezoidal shaped ditches or gaps in between the insulation plates 10a to 14 and associated conductor plates 3 to 10) the straight or flat portions of the conductor plates 3 to 10 will rest very firmly in contact with their adjacent insulation plates 10a to 14, thereby reliably maintaining the slot widths w at an accurate width ready for assembly onto associated conductor lengths L1,L2,L3,N of a busbar. In practice, the depth a₅ of flange a₁ is slightly greater than the channel or joggle depth of the associated conductor plate 3,5,7,9 so that the flange is compressed in between the bottom of the associated channel and associated insulation plate 10a,11,12,13. Similarly, depth b₅ is slightly greater than the channel or joggle depth of the associated conductor plate 4,6,8,10 so that the flange b₁ is compressed in between the bottom of the associated channel and associated insulation plate 11,12,13,14. Thus the conductor plate pairs (3,4;5,6;7,8;9,10) are held firmly together by the compressed flanges a₁,b₁ taking up any slack.

Additionally, it is believed that the narrowing of the pairs of metal plates (3,4 to 9,10) in their central regions is advantageous in itself since tapered portions t of each respective pair of plates define a bottom or base to each slot s for the conductors preventing aligned conductors, disadvantageously, engaging the central bolt 15 or insulator tube 26.

Thus, it is believed that the arrangement as aforedescribed offers many advantages over prior art joint packs.

Although the present invention has been described in relation to a four slot joint for busbars each having four conductor lengths engaging in the slots, the present invention may provide a similar joint having five slots at each side for busbars having housings carrying five conductors or other numbers of slots may be provided to suit the particular busbar concerned.

In some cases, the bolt 15 may require loosening prior to assembly of the joint pack 1 onto elongate conductors L1, L2, L3, N, in which case the conductor plates 3 to 10 may lose contact with their associated insulation plates 10a - 14. Even so the flanges a₁, b₁ of the bush will slightly expand to take up the slack so that the conductor plates pairs 3 to 10 will still be held tightly in the joint. It is an advantage of embodiments of the present invention that any loosening of the bolt will be much less than required with known joint packs in which the conductor plates are held much more loosely.

Therefore, still further according to the present invention there is provided a joint for joining together elongate conductors of a first length of busbar to elongate conductors of a second length of busbar, said elongate conductors being joined together in end-to-end relationship, said joint having pairs of conductor plates defining slots for receiving the elongate conductors (preferably with each plate of the pair held fixed relative to the other plate of the pair), and insulation plates between said pairs, the arrangement being such that the ends of the conductor plates are spring-loaded or urged apart from one another (against associated ones of the insulation plates at least in use of the joint) to provide a set slot opening width, the joint preferably being provided with means to retain the conductor plates and insulation plates together under a variable loading force and the slot opening width remaining substantially unchanged over different values of the loading force.

Where the slot opening width remains the same under a variable loading force, the distance between the insulation plates may vary but the slot opening may remain unchanged until the ends of the conductor plates contact their associated insulation plates, when any further loading force may slightly deform ends of the plates compressing them together to firmly clamp onto associated conductor plates.

The conductor plates of each pair may be compressed or held together firmly at or near central regions thereof to spring the ends of the plates of each pair apart from one another.

Thus each pair of plates may effectively be sprung or able to float as a unit from associated opposing insulation plates.

The joint according to the invention preferably has one or more of the following features:
a) conductor plates connected together in pairs at central regions thereof with ends of the conductor plates being splayed or sprung apart a set opening slot width, the pairs of conductor plates preferably being sprung as units in between associated opposing insulation plates; or
b) conductor plates having channels or recesses receiving bush flanges of a depth greater than the associated channel or recess, said flanges being compressible until end regions of the plates contact associated insulation plates.

In a preferred embodiment of the present invention, prior to assembly on a busbar, there will be a small gap of e.g. 0.5 mm (preferably 0.05mm) between the conductor plates and their associated insulation plates and the set slot opening width will be 5 mm. The slot opening width is maintained by the spring pressure of the conductor plate pair, the plates of pair being firmly held together at central regions thereof. The elongate conductors will have a slightly greater thickness than the set slot opening width and may be e.g. 6 mm thickness. Thus, on insertion of the 6 mm thick conductor plates into a slot opening of 5 mm, the conductor plates of the associated pair will grip firmly onto the elongate conductor and be slightly deformed to take up the 0.5mm (preferably 0.05 mm) gaps, thus firmly contacting the associated insulation plates. Thus the joint is held in the correct position and any alignment adjustments can be made without the necessity of having to immediately tighten the torque bolt.

Therefore, further according to the present invention there is provided a joint for joining together elongate conductors of a first length of busbar to elongate conductors of a second length of busbar, said elongate conductors being joined together in end-to-end relationship, said joint having pairs of conductor plates defining slots for receiving the elongate conductors, and insulation plates between said pairs, the arrangement being such that the ends of the conductor plates are spring-loaded or urged apart from one another to provide a set slot opening width.

The set slot opening width will usually be independent of the spacing of the insulation plates as long as the insulation plates do not contact the conductor plates.

Small gaps (e.g. 0.5mm, preferably 0.05 mm) may be provided between the pairs of the conductor plates and their associated insulation plates, to allow movement of the ends of the plates outwardly into contact with their associated insulation plates as elongate conductors of a busbar are inserted into the slots.

## Claims

1. A joint (1) for joining together elongate conductors (L1,L2,L3,N) of a first length (2) of busbar and elongate conductors (L1,L2,L3,N) of a second length of busbar, said elongate conductors (L1,L2,L3,N) being joined together in end-to-end relationship, said joint (1) having pairs of conductor plates (3 to 10) defining slots (S) for receiving the elongate conductors (L1,L2,L3,N), and insulation plates (10a,11,12,13,14) between said pairs, wherein the central region of each conductor plate has a channel or recess, and the conductor plates (3 to 10) of each pair (3 to 10) overlie one another such that the channels or recesses of said conductor plates extend in opposed directions with the bottoms of the channels or recesses being adjacent one another in order to define central gaps in between the conductor plates and the insulation plates the gaps accomodating bushes (16,17,18,19) **characterised in that** said bushes (16,17,18,19) compress the central recessed or channelled regions of the conductor plates (3 to 10) of each pair (3 to 10) together to spring-load or urge the ends of the conductor plates (3 to 10) of each pair (3 to 10) apart from one another to provide a set slot opening width (w) defined by the depths of the recesses or channels.

2. A joint (1) as claimed in Claim 1 in which the set slot opening width (W) is independent of the spacing of the insulation plates (10a,11 to 14) as long as the insulation plates (10a, 11 to 14) do not contact the conductor plates (3 to 10).

3. A joint (1) as claimed in any one of the preceding claims in which small gaps (e.g. .05 mm) are provided between the pairs of the conductor plates (3 to 10) and their associated insulation plates (10a,11,12,13,14) sufficient to allow movement of the ends of the plates (3 to 10) outwardly into contact with their associated insulation plates (10a,11,12,13,14) as elongate conductors (L1,L2,L3,N) of a busbar (2) are inserted into the slots (S) .

4. A joint (1) as claimed in any one of the preceding claims in which each plate (3 to 10) of each pair (3 to 10) is held fixed relative to the other plate (3 to 10) of the pair (3 to 10).

5. A joint (1) as claimed in any one of the preceding claims in which the conductor plates (3 to 10) are spring-loaded or urged apart from one another against associated ones of the insulation plates (10a, 11 to 14) at least in use of the joint (1).

6. A joint (1) as claimed in any one of the preceding claims provided with means (15) to retain the conductor plates (3 to 10) and insulation plates (10a, 11 to 14) together under a variable loading force and the slot opening width (W) remaining substantially unchanged over different values of the loading force.

7. A joint (1) as claimed in Claim 6 in which the distance between the insulation plates varies with varying loading force but the slot opening (W) remains unchanged until the ends of the conductor plates (3 to 10) contact their associated insulation plates (10a,11,12,13,14), when any further loading force slightly deforms ends of the plates (3 to 10) compressing them together to firmly clamp onto associated conductors (L1,L2,L3,N), in use.

8. A joint (1) according to any one of the preceding claims wherein conductor plates (3 to 10) having channels or recesses receiving bush flanges (a₁,b₂) of a depth greater than the associated channel or recess, said flanges (a₁,b₂) being compressible until end regions of the plates (3 to 10) contact associated insulation plates (10a,11,12,13,14).

9. A joint (1) as claimed in any one of the preceding Claims in which said bushes (16,17,18,19) each comprise two interfitting bush components (a,b).

10. A joint (1) as claimed in Claim 9 in which each bush component (a,b) has an external flange (a₁,b₁) and a tubular portion (a₂,b₂) which in use surrounds a central bolt (15) of the joint (1) (or insulation sleeve surrounding the bolt).

11. A joint (1) as claimed in Claim 10 in which the tubular portion (a₂) of one of the components (a) fits inside a tubular portion (b₂) of the other bush component (b) engaging an internal flange (b₃) thereof to set a gap between the flanges (a₁,b₁) of the bush (16,17,18,19).

12. A joint (1) as claimed in Claim 11 in which the gap is slightly less than the combined thickness (5',6';7',8') of the conductor plates of one pair (5,6;7,8).

13. A joint (1) as claimed in any one of the preceding claims having a double-headed torque bolt (15).

14. A joint (1) as claimed in any one of the preceding claims having a central bolt (15) arranged to tighten the metal plates (3 to 10) of the joint (1) around elongate conductors (L1,L2,L3,N) with only one or two turns of the bolt (15).

15. A joint (1) as claimed in Claim 9 in which, in use, each flange (a,b) is in contact with an associated one of the insulation plates (3 to 10).

16. A kit of parts comprising a plurality of busbar lengths (2) and at least one busbar joint (1) in accordance with any of the preceding claims.

17. A kit as claimed in Claim 16 in which the elongate conductors (L1,L2,L3,N) have a thickness of 6 mm and the set slot opening width (W) is 5 mm.

18. A busbar assembly comprising at least two busbar conductor lengths (2) assembled together in end-to-end relationship with a joint (1) in accordance with any one of the Claims 1 to 16 joining together the conductors (L1,L2,L3,N) of each busbar conductor length (2) in end-to-end relationship.

19. Use of a joint (1) in accordance with any one of Claims 1 to 15 to assemble together the conductors (L1,L2,L3,N) of two busbar lengths (2) in end-to-end relationship.

## Patentansprüche

1. Verbindungselement (1) zum gegenseitigen Verbinden länglicher Leiter (L1, L2, L3, N) eines ersten Längenstücks (2) einer Sammelschiene und länglicher Leiter (L1, L2, L3, N) eines zweiten Längenstück einer Sammelschiene, wobei die länglichen Leiter (L1, L2, L3, N) in einer End-zu-End-Beziehung miteinander verbunden sind, das Verbindungselement (1) Paare von Leiterplatten (3 bis 10) welche Schlitze (S) zum Aufnehmen der länglichen Leiter (L1, L2, L3, N) festlegen, und Isolierplatten (10a, 11, 12, 13, 14) zwischen den Paaren hat, wobei der zentrale Bereich jeder Leiterplatte einen Kanal oder Rücksprung hat und die Leiterplatten (3 bis 10) jedes Paars (3 bis 10) derart übereinander liegen, daß die Kanäle oder Rücksprünge der Leiterplatten sich in gegenüberliegende Richtungen erstrecken und die Böden der Kanäle oder Rücksprünge aneinandergrenzend ausgebildet sind, um zentrale Zwischenräume zwischen den Leiterplatten und den Isolierplatten festzulegen, welche Zwischenräume Buchsen (16, 17, 18, 19) aufnehmen, **dadurch gekennzeichnet, daß** die Buchsen (16, 17, 18, 19) die zentralen, zurückspringenden oder kanalförmigen Bereiche der Leiterplatten (3 bis 10) jedes Paars (3 bis 10) zusammen drücken, um die Enden der Leiterplatten (3 bis 10) jedes Paars (3 bis 10) unter Federspannung zu setzen oder auseinander zu drücken, um eine festgesetzte Schlitzöffnungsweite (w) zu schaffen, welche durch die Höhen der Rücksprünge oder Kanäle festgelegt ist.

2. Verbindungselement (1) nach Anspruch 1, **dadurch gekennzeichnet, daß** die festgesetzte Schlitzöffnungsweite (W) unabhängig von dem Abstand der Isolierplatten (10a, 11 bis 14) ist, solange die Isolierplatten (10a, 11 bis 14) die Leiterplatten (3 bis 10) nicht kontaktieren.

3. Verbindungselement (1) nach einem der vorhergehenden Ansprüche, **dadurch gekennzeichnet, daß** kleine Zwischenräume (z. B. 0,05 mm) zwischen den Paaren der Leiterplatten (3 bis 10) und den ihnen zugeordneten Isolierplatten (10a, 11, 12, 13, 14) vorgesehen sind, welche dazu ausreichen, eine Bewegung der Enden der Platten (3 bis 10) nach außen in Kontakt mit den ihnen zugehörigen Isolierplatten (10a, 11, 12, 13, 14) zu gestatten, wenn längliche Leiter (L1, L2, L3, N) einer Sammelschiene (2) in die Schlitze (S) eingsetzt werden.

4. Verbindungselement (1) nach einem der vorhergehenden Ansprüche, **dadurch gekennzeichnet, daß** jede Platte (3 bis 10) jedes Paars (3 bis 10) relativ zu der anderen Platte (3 bis 10) des Paars (3 bis 10) festgehalten ist.

5. Verbindungselement (1) nach einem der vorhergehenden Ansprüche, **dadurch gekennzeichnet, daß** die Leiterplatten (3 bis 10) zumindest beim Gebrauch des Verbindungselementes (1) unter Federspannung gesetzt sind oder auseinander gegen zugehörige Isolierplatten (10a, 11 bis 14) gedrückt werden.

6. Verbindungselement (1) nach einem der vorhergehenden Ansprüche, **gekennzeichnet durch** eine Einrichtung (15) zum Zusammenhalten der Leiterplatten (3 bis 10) und der Isolierplatten (10a, 11 bis 14) unter einer variablen Belastungskraft, wobei die Schlitzöffnungsweite (W) über unterschiedliche Werte der Belastungskraft im wesentlichen unverändert bleibt.

7. Verbindungselement (1) nach Anspruch 6, **dadurch gekennzeichnet, daß** sich der Abstand zwischen den Isolierplatten mit der Belastungskraft verändert, hingegen die Schlitzöffnung (W) unverändert bleibt, bis die Enden der Leiterplatten (3 bis 10) ihre zugehörigen Isolierplatten (10a, 11, 12, 13, 14) kontaktieren, wenn jede weitere Belastungskraft die Enden der Platten (3 bis 10) geringfügig verformt und diese zueinander drückt, um beim Gebrauch die zugehörigen Leiter (L1, L2, L3, N) festzuklemmen.

8. Verbindungselement (1) nach einem der vorhergehenden Ansprüche, **dadurch gekennzeichnet, daß** die Leiterplatten (3 bis 10) Kanäle oder Rücksprünge erhaltende Buchsenflansche (a₁, b₂) einer Tiefe aufweisen, welche größer als der zugehörige Kanal oder Rücksprung ist, wobei die Flansche (a₁, b₂) zusammendrückbar sind, bis Endbereiche der Platten (3 bis 10) zugehörige Isolierplatten (10a, 11, 12, 13, 14) kontaktieren.

9. Verbindungselement (1) nach einem der vorhergehenden Ansprüche, **dadurch gekennzeichnet, daß** die Buchsen (16, 17, 18, 19) jeweils zwei zusammenpassende Buchsenelemente (a, b) aufweisen.

10. Verbindungselement (1) nach Anspruch 9, **dadurch gekennzeichnet, daß** jedes Buchsenelement (a, b) einen äußeren Flansch (a₁, b₁) und einen rohrförmigen Abschnitt (a₂, b₂) hat, welcher beim Gebrauch einen zentralen Bolzen (15) des Verbindungselementes (1) (oder eine den Bolzen umgebende IsolierBuchse) umgibt.

11. Verbindungselement (1) nach Anspruch 10, **dadurch gekennzeichnet, daß** der rohrförmige Abschnitt (a₂) einer der Elemente (a) in einen rohrförmigen Abschnitt (b₂) des anderen Buchsenelementes (b) hineinpaßt und mit einem inneren Flansch (b₃) desselben in Eingriff steht, um einen Zwischenraum zwischen den Flanschen (a₁, b₁) der Buchse (16, 17, 18, 19) festzulegen.

12. Verbindungselement (1) nach Anspruch 11, **dadurch gekennzeichnet, daß** der Zwischenraum geringfügig kleiner als die zusammengefaßte Dicke (5', 6'; 7', 8') der Leiterplatten eines Paars (5, 6; 7, 8) ist.

13. Verbindungselement (1) nach einem der vorhergehenden Ansprüche, **gekennzeichnet durch** einen doppelköpfigen Drehbolzen (15).

14. Verbindungselement (1) nach einem der vorhergehenden Ansprüche, **gekennzeichnet durch** einen zentralen Bolzen (15), welcher zum Festziehen der Metallplatten (3 bis 10) des Verbindungselementes (1) um längliche Leiter (L1, L2, L3, N) mit lediglich einer oder zwei Drehungen des Bolzens (15) ausgebildet ist.

15. Verbindungselement (1) nach Anspruch 9, **dadurch gekennzeichnet, daß** beim Gebrauch jeder Flansch (a, b) in Kontakt mit einer zugehörigen der Isolierplatten (3 bis 10) steht.

16. Bausatz von Teilen, umfassend mehrere Sammelschienen-Längenstücke (2) und wenigstens ein Sammelschienen-Verbindungselement (1) gemäß einem der vorhergehenden Ansprüche.

17. Bausatz nach Anspruch 16, **dadurch gekennzeichnet, daß** die länglichen Leiter (L1, L2, L3, N) eine Dicke von 6 mm haben, und die festgesetzte Schlitzöffnungsweite (W) 5 mm beträgt.

18. Sammelschienenanordnung umfassend wenigstens zwei Sammelschienen-Leiterlängenstücke (2), welche mit einem Verbindungselement (1) gemäß einem der Ansprüche 1 bis 16 in einer End-zu-End-Beziehung zusammengebaut sind, um die Leiter (L1, L2, L3, N) jedes Sammelschienen-Leiterlängenstücks (2) in einer End-zu-End-Beziehung miteinander zu verbinden.

19. Verwendung eines Verbindungselementes (1) nach einem der Ansprüche 1 bis 15 zum Zusammenbauen der Leiter (L1, L2, L3, N) zweier Sammelschienen-Längenstücke (2) in einer End-zu-End-Beziehung.

## Revendications

1. Jonction (1) destinée à réunir des conducteurs allongés (L1, L2, L3, N) d'une première longueur (2) d'un bus d'alimentation et des conducteurs allongés (L1, L2, L3, N) d'une seconde longueur d'un bus d'alimentation, lesdits conducteurs allongés (L1, L2, L3, N) étant réunis dans une relation bout à bout, ladite jonction (1) comportant des paires de plaques conductrices (3 à 10) définissant des fentes (S) destinées à recevoir les conducteurs allongés (L1, L2, L3, N), et des plaques isolantes (10a, 11, 12, 13, 14) entre lesdites paires, où la région centrale de chaque plaque conductrice comporte un canal ou un évidement, et les plaques conductrices (3 à 10) de chaque paire (3 à 10) se recouvrent les unes les autres, de sorte que les canaux ou les évidements desdites plaques conductrices s'étendent dans des directions opposées, les fonds des canaux ou des évidements étant contigus les uns aux autres de manière à définir des espacements centraux entre les plaques conductrices et les plaques isolantes, les espacements recevant des manchons (16, 17, 18, 19) **caractérisée en ce que** lesdits manchons (16, 17, 18, 19) compriment ensemble les régions centrales évidées ou en forme de canal des plaques conductrices (3 à 10) de chaque paire (3 à 10) afin de charger par ressort ou d'écarter les extrémités des plaques conductrices (3 à 10) de chaque paire (3 à 10) les unes des autres afin de réaliser une largeur d'ouverture de fente fixe (W) définie par les profondeurs des évidements ou des canaux.

2. Jonction (1) salon la revendication 1, dans laquelle la largeur d'ouverture de fente fixe (W) est indépendante de l'espacement des plaques isolantes (10a, 11 à 14) tant que les plaques isolantes (10a, 11 à 14) ne viennent pas en contact avec les plaques conductrices (3 à 10).

3. Jonction (1) selon l'une quelconque des revendications précédentes, dans laquelle de petits emplacements (par exemple 0,05 mm) sont réalisés entre les paires des plaques conductrices (3 à 10) et leurs plaques isolantes associées (10a, 11, 12, 13, 14) de façon suffisante pour permettre un déplacement des extrémités des plaques (3 à 10) vers l'extérieur jusqu'en contact avec leurs plaques isolantes associées (10a, 11, 12, 13, 14) lorsque des conducteurs allongés (L1, L2, L3, N) d'un bus d'alimentation (2) sont insérés dans les fentes (S).

4. Jonction (1) selon l'une quelconque des revendications précédentes, dans laquelle chaque plaque (3 à 10) de chaque paire (3 à 10) est maintenue fixe par rapport à l'autre plaque (3 à 10) de la paire (3 à 10).

5. Jonction (1) selon l'une quelconque des revendications précédentes, dans laquelle les plaques conductrices (3 à 10) sont chargées par ressort ou écartées les unes des autres contre les plaques associées parmi les plaques isolantes (10a, 11 à 14) au moins lors de l'utilisation de la jonction (1).

6. Jonction (1) selon l'une quelconque des revendications précédentes, munie d'un moyen (15) pour maintenir ensemble les plaques conductrices (3 à 10) et les plaques isolantes (10a, 11 à 14) sous une force de charge variable et la largeur d'ouverture de fente (W) restant pratiquement inchangée sur des valeurs différentes de la force de charge.

7. Jonction (1) selon la revendication 6, dans laquelle la distance entre les plaques isolantes varie avec la force de charge variable mais l'ouverture de fente (W) reste inchangée jusqu'à ce que les extrémités des plaques conductrices (3 à 10) viennent en contact avec leurs plaques isolantes associées (10a, 11, 12, 13, 14), lorsque toute force de charge supplémentaire déforme légèrement les extrémités des plaques (3 à 10) en les comprimant ensemble afin d'effectuer un serrage ferme sur les conducteurs associés (L1, L2, L3, N), en utilisation.

8. Jonction (1) selon l'une quelconque des revendications précédentes, dans laquelle les plaques conductrices (3 à 10) comportent des canaux ou des évidements recevant les collerettes des manchons (a₁, b₂) d'une profondeur supérieure au canal ou à l'évidement associés, lesdites collerettes (a₁, b₂) étant compressibles jusqu'à ce que les régions d'extrémité des plaques (3 à 10) viennent en contact avec les plaques isolantes associées (10a, 11, 12, 13, 14).

9. Jonction (1) selon l'une quelconque des revendications précédentes, dans laquelle lesdits manchons (16, 17, 18, 19) compriment chacun deux composants de manchon s'adaptant l'un à l'autre (a, b).

10. Jonction (1) selon la revendication 9, dans laquelle chaque composant de manchon (a, b) comporte une collerette externe (a₁, b₁) et une partie tubulaire (a₂, b₂) qui, en utilisation, entoure un boulon central (15) de la jonction (1) (ou un manchon isolant entourant le boulon).

11. Jonction (1) selon la revendication 10, dans laquelle la partie tubulaire (a₂) de l'un des composants (a) s'adapte à l'intérieur d'une partie tubulaire (b₂) de l'autre composant de manchon (b) en se mettant en prise avec une collerette interne (b₃) de celui-ci en vue d'établir un espacement entre les collerettes (a₁, b₁) du manchon (16, 17, 18, 19).

12. Jonction (1) selon la revendication 11, dans laquelle l'espacement est légèrement inférieur à l'épaisseu combinée (5', 6' ; 7', 8') des plaques conductrices d'une paire (5, 6 ; 7, 8).

13. Jonction (1) selon l'une quelconque des revendications précédentes, comportant un boulon auto-cassant à double tête (15).

14. Jonction (1) selon l'une quelconque des revendications précédentes, comportant un boulon central (15) agencé pour serrer les plaques de métal (3 à 10) de la jonction (1) autour de conducteurs allongés (L1, L2, L3, N) avec seulement un ou deux tours du boulon (15).

15. Jonction (1) selon la revendication 9, dans laquelle, en utilisation, chaque collerette (a, b) se trouve en contact avec une plaque associée parmi les plaques isolantes (3 à 10).

16. Nécessaire de pièces comportant une pluralité de longueurs de bus d'alimentation (2) et au moins une jonction de bus d'alimentation (1) conformément à l'une quelconque des revendications précédentes.

17. Nécessaire selon la revendication 16, dans lequel les conducteurs allongés (L1, L2, L3, N) présentent une épaisseur de 6 mm et la largeur d'ouverture de fente fixée (W) est de 5 mm.

18. Ensemble de bus d'alimentation comprenant au moins deux longueurs de conducteur de bus d'alimentation (2) montées ensemble dans une relation bout à bout avec une jonction (1) conforme à l'une quelconque des revendications 1 à 16, réunissant les conducteurs (L1, L2, L3, N) de chaque longueur de conducteur de bus d'alimentation (2) dans une relation bout à bout.

19. Utilisation d'une jonction (1) selon l'une quelconque des revendications 1 à 15, en vue de monter ensemble les conducteurs (L1, L2, L3, N) de deux longueurs de bus d'alimentation (2) dans une relation bout à bout.
